# EUROPEAN PATENT APPLICATION

(11) **EP 1 204 253 A1**
(43) Date of publication of application: **08.05.2002**
(21) Application number: 99937033.1
(22) Date of filing: 11.08.1999
(51) Int. Cl.: H04L 12/56

(54) **FRAME RELAY COMMUNICATION DEVICE, FRAME RELAY SWITCHING SYSTEM, FRAME RELAY COMMUNICATION SYSTEM AND PVC STATUS CONFIRMATION PROCEDURE CONTROL METHOD**

(71) Applicant: FUJITSU LIMITED, Kawasaki-shi, Kanagawa 211-8588 (JP)
(72) Inventor: EBARA, Nobuyuki, Fujitsu Terminal Systems Ltd, Maebashi-shi, Gumma 371-0855 (JP)
(74) Representative: Hitching, Peter Matthew
(86) International application number: JP9904355
(87) International publication number: WO0113588

(57) **Abstract**

A frame relay communication device (10) sends, to a frame relay network F₁ at least twice continuously, a second state inquiry message SE-F (full-state display) for inquiring normality of a first data link PVC#1 (second data link PVC#2) between a party on the other end of communication connected through the frame relay network F₁. The frame relay communication device (10) receives a second response message S-F corresponding to a second state inquiry message SE-F sent from the frame relay network F₁, and recognizes a state of the first data link PVC#1 (second data link PVC#2) based on a reception-result. Therefore, if the state of the first data link PVC#1 was changed after the second response message S-F of the first time was sent, the frame relay communication device (10) recognizes the state of the first data link PVC#1 by the second response message S-F of the second time.

## Description

### TITLE OF THE INVENTION

Frame relay communication device, frame relay switchboard, frame relay communication system, and method of controlling a procedure for confirming PVC state

### TECHNICAL FIELD

The present invention relates to a frame relay communication device, a frame relay switchboard, a frame relay communication system, and a method of controlling a unit for confirming PVC state.

The frame relay is a technique for largely simplifying X.25 protocol used for a conventional packet switching communication system, and transferring (relaying) a frame of a data link layer (second layer) of an OSI (Open Systems Interconnection) referring model at high speed. The frame relay is applied to a communication style which instantaneously transfers large data such as connection through LAN (Local Area Network). This frame relay communication protocol is defined in ITU (International Telecommunication Union) - T recommendation Q.933. In a communication service using this kind of frame relay, a speedup is always required.

### BACKGROUND ART

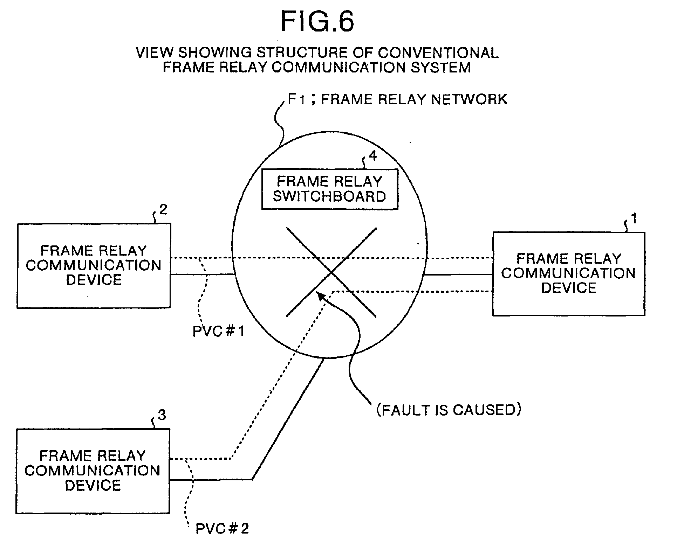

Fig. 6 shows a construction of a conventional frame relay communication system. In Fig. 6, frame relay communication devices 1 to 3 are connected to a frame relay network F₁. In the frame relay communication devices 1 to 3, devices of parties on the other end of communications are previously fixedly set by switching method called PVC (Permanent Virtual Circuit). That is, a first data link PVC#1 is previously set between the frame relay communication device 1 and the frame relay communication device 2, and a second data link PVC#2 is previously set between the frame relay communication device 1 and the frame relay communication device 3. Here the first data link PVC#1 and the second data link PVC#2 are logical channels set on physical lines, and respectively corresponds to private lines in a conventional packet switching communication system.

Therefore, the frame relay communication device 1 can carry out communication with both the frame relay communication device 2 and the frame relay communication device 3 through the first data link PVC#1 and the second data link PVC#2. On the other hand, the frame relay communication device 2 can carry out communication only with the frame relay communication device 1 through the first data link PVC#1.

Similarly, the frame relay communication device 3 can carry out communication only with the frame relay communication device 1 though the second data link PVC#2. In this manner, Fig. 6 shows a network construction of a center (frame relay communication device 1) - end (frame relay communication device 2 and frame relay communication device 3) type.

The frame relay communication devices 1 to 3 respectively send frames to parties on the other end of communications. Here, in addition to data body, a DLCI (Data Link Connection Identifier) is included in the frame. This DLCI is an identifier for identifying the first data link PVC#1 and the second data link PVC#2 set on the physical lines.

In the frame relay network F₁, frames sent from the frame relay communication devices 1 to 3 are switched to the device of the party on the other end of communication based on a result of identification of a data link (first data link PVC#1 or second data link PVC#2) by the DLCI.

That is, if a frame to the frame relay communication device 2 is sent from the frame relay communication device 1, the frame relay switchboard 4 refers to the DLCI of the frame, thereby identifying the first data link PVC#1 and then, this frame is switched to the first data link PVC#1. With this operation, the frame is received by the frame relay communication device 2. Similarly, if a frame to the frame relay communication device 3 is sent from the frame relay communication device 1, the frame relay switchboard 4 refers to the DLCI of the frame, thereby identifying the second data link PVC#2, and this frame is switched to the second data link PVC#2. With this operation, the frame is received by the frame relay communication device 3.

In the communication protocol of the frame relay, it is defined that resent control, i.e., calling control of a frame is not carried out when an error is caused for the sake of enhancing the processing speed of data transmission by the frame relay network F₁. Therefore, in the frame relay, it is necessary to confirm the states (PVC states, hereinafter) of data links between the frame relay communication device and the frame relay network F₁ and between the frame relay communication device and the frame relay communication device 1 on the side of the frame relay communication devices 1 to 3.

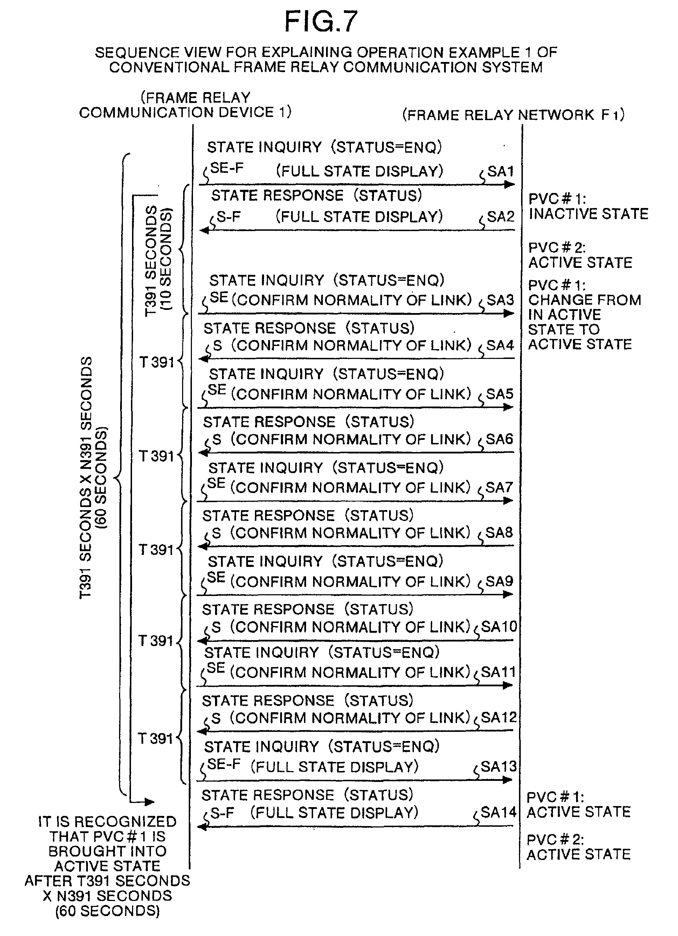

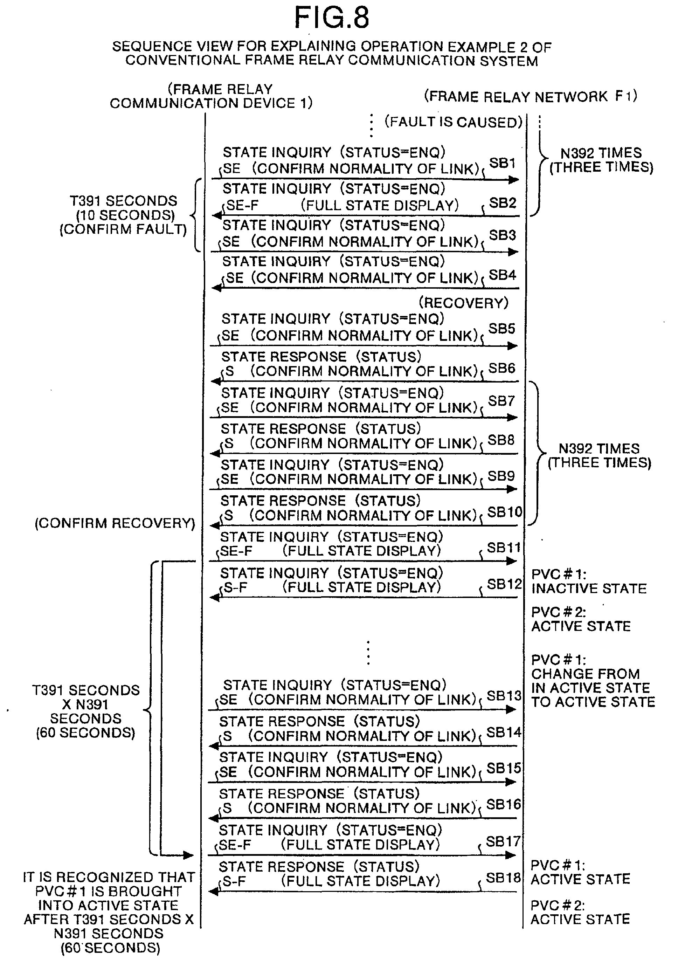

Thereupon, in the communication protocol of the frame relay, a known PVC state confirming procedure is defined as procedure for confirming the PVC state. With reference to Fig. 7 and Fig. 8, operation example 1 and operation example 2 in PVC state confirming procedure will be explained in detail. Fig. 7 is view for explaining in sequence procedure for confirming the PVC state executed by the frame relay communication device 1 (see Fig. 6).

Between the frame relay communication device 1 (terminal) and the frame relay network F₁, sending operation of a first state inquiry message SE (STATUS=ENQ) and sending operation of a first response message S (STATUS) corresponding to the former message are repeated at intervals of T391 seconds (default value: 10 seconds), and states between the frame relay communication device 1 and the frame relay network F₁ are confirmed.

The first state inquiry message SE is a message for confirming the normality of the data link between the frame relay communication device 1 and the frame relay network F₁, i.e., for requesting the frame relay network F₁ for link completeness confirmation. The first response message S is a message of state display replied from the frame relay network F₁ corresponding to the first state inquiry message SE.

From the frame relay communication device 1, a second state inquiry message SE-F is sent to the frame relay network F₁ once in every N391 times (default value: six times) . The second state inquiry message SE-F is a message for confirming the normality of each of all data links (first data link PVC#1 and second data link PVC#2) concerning the frame relay communication device 1, i.e., for requesting the frame relay network F₁ to carry out full-state display. If the frame relay network F₁ received the secohd state inquiry message SE-F, the frame relay network F₁ sends second response messages S-F respectively showing states of the first data link PVC#1 and the second data link PVC#2 to the frame relay communication device 1.

As the states of the first data link PVC#1 and the second data link PVC#2, there exist an active state and an inactive state. The active state is a state in which the first data link PVC#1 (second data link PVC#2) can be used, and the inactive state is a state which is not suitable for using the first data link PVC#1 (second data link PVC#2). Of the N391 times (six times), the first state inquirymessage SE appears five times, and the second state inquiry message SE-F appears one time. Therefore, the first state inquiry message SE is sent at intervals of T391 seconds (10 seconds) , but since the second state inquiry message SE-F is sent one in every six times, the second state inquiry message SE-F is sent at intervals of T391×N391 seconds (60 seconds).

In Fig. 7, if the frame relay communication device 1 (see Fig. 6) is brought into a communication-possible state (line up state), in step SA1, the frame relay communication device 1 sends the second state inquiry message SE-F (full-state display) to the frame relay network F₁. If the second state inquiry message SE-F is received by the frame relay network F₁, the frame relay network F₁ confirms the states of the first data link PVC#1 and the second data link PVC#2 (see Fig. 6).

The frame relay communication device 2 and the frame relay communication device 3 also confirm the PVC state by the PVC state confirming procedure like the frame relay communication device 1. That is, the frame relay communication device 2 and the frame relay communication device 3 send the first state inquiry message SE and the second state inquiry message SE-F to the frame relay network F₁. When the frame relay communication device 2 (or frame relay communication device 3) is out of order or power is not on, or when the data link is in fault, the frame relay network F₁ does not receive the first state inquiry message SE nor the second state inquiry message SE-F.

Therefore, the frame relay network F₁ confirms the state of the first data link PVC#1 (second data link PVC#2) based on the receiving state of the first state inquiry message SE and the second state inquiry message SE-F from the frame relay communication device 2 (frame relay communication device 3).

More specifically, when the first state inquiry message SE and the second state inquiry message SE-F are continuously received defined times, the frame relay network F₁ recognized that the first data link PVC#1 (second data link PVC#2) is in the active state. On the contrary, the first state inquiry message SE and the second state inquiry message SE-F are not received continuously defined times, the first data link PVC#1 (second data link PVC#2) is in the inactive state.

Referring back to Fig. 7, when the second state inquiry message SE-F is received by the frame relay network F₁ in step SA1, it is judged that the first data link PVC#1 is in the inactive state, and on one hand, the second data link PVC#2 is in the active state. Thus, in step SA2, the frame relay network F₁ sends, to the frame relay communication device 1, the second response message S-F (full-state display) for informing that the first data link PVC#1 is in the inactive state, and the second data link PVC#2 is in the active state.

If the frame relay communication device 1 received the second response message S-F (full-state display), the frame relay communication device 1 recognizes that the first data link PVC#1 is in an inactive state and on one hand the second data link PVC#2 is in an active state. With this, since the first data link PVC#1 can not be used, the frame relay communication device 1 stops sending a frame to the frame relay communication device 2. Since the second data link PVC#2 can be used, the frame relay communication device 1 sends a frame to the frame relay communication device 3.

Immediately after the frame relay communication device 1 recognized the states of the first data link PVC#1 and the second data link PVC#2, the first data link PVC#1 is brought into the active state from the inactive state. However, at this point of time, since the frame relay communication device 1 has just sent the second state inquiry message SE-F (full-state display) at step SA1, the frame relay communication device 1 cannot recognize this variation in state.

Then, after T391 seconds (10 seconds) was elapsed from an instant when the second state inquiry message SE-F (full-state display) was sent (step SA1), the frame relay communication device 1 sends a first state inquiry message SE (link completeness confirmation) to the frame relay network F₁ in step SA3. If the first state inquiry message SE (link completeness confirmation) is received by the frame relay network F₁, in step SA4, the frame relay network F₁ sends the first response message S indicative of a data link state (normal, in this case) between the frame relay network F₁ and the frame relay communication device 1.

If the frame relay communication device 1 received the first response message S (link completeness confirmation), the frame relay communication device 1 recognizes that the data link is in a normal state from the first response message S (link completeness confirmation). Thereafter, in steps SA3 to SA12, the first state inquiry message SE (link completeness confirmation) is sent to the frame relay network F₁ from the frame relay communication device 1 and the corresponding first response message S (link completeness confirmation) is sent to the frame relay communication device 1 from the frame relay network F₁ at intervals of T391 seconds (10 seconds) and with this, the PVC state confirming procedure is executed.

Then, after the first state inquiry message SE (link completeness confirmation) was sent five times, if the first response message S (link completeness confirmation) is received in step SA12, the frame relay communication device 1 sends the second state inquiry message SE-F (full-state display) to the frame relay network F₁ in step SA13.

If the frame relay network F₁ received the second state inquiry message SE-F (full-state display), the frame relay network F₁ recognizes the states of the first data link PVC#1 and the second data link PVC#2 (see Fig. 6) in the same manner as that described above. In this case, both the first data link PVC#1 and second data link PVC#2 are in the active states . Therefore, in step SA14, the frame relay network F₁ sends the second response message S-F (full-state display) to the frame relay communication device 1 to inform that both the first data link PVC#1 and second data link PVC#2 are in the active states.

If the frame relay communication device 1 received the second response message S-F (full-state display), the frame relay communication device 1 recognizes that the first data link PVC#1 and the second data link PVC#2 are in the active states. That is, in this case, the frame relay communication device 1 recognizes this variation after maximum T391×N391 seconds (60 seconds) from an instant when the first data link PVC#1 was actually changed from the inactive state to the active state.

Next, the operation example 2 will be explained with reference to Fig. 8. The operation example 2 is an example of the PVC state confirming procedure when a fault is caused in the frame relay network F₁ shown in Fig. 6. In Fig. 8, if a fault is generated in the frame relay network F₁ in a state in which the first state inquiry message SE (second state inquiry message SE-F) is sequentially sent from the frame relay communication device 1 to the frame relay network F₁, the first response message S (second response message S-F) is not sent from the frame relay network F₁.

In this case, when the frame relay communication device 1 received the first state inquiry message SE (second state inquiry message SE-F) of the latest N393 times (four times), if there is no response from the frame relay network F₁ N392 times (three times), the frame relay communication device 1 recognizes that a fault (permanent fault) is caused in the frame relay network F₁.

That is, in step SB1, after the frame relay communication device 1 sent second first state inquiry message SE of the N393 times (four times), the frame relay communication device 1 recognizes that first response message S from the frame relay network F₁ was not received. After T391 seconds (10 seconds) from an instant when the first state inquiry message SE was sent, the frame relay communication device 1 sends third second state inquiry message SE-F to the frame relay network F₁ (step SB2) and then, the frame relay communication device 1 recognizes that second response message S-F from the frame relay network F₁ was not received.

With this, the frame relay communication device 1 recognizes that a fault is caused in the frame relay network F₁ and then, sending of the frame is stopped. After step SB3, the frame relay communication device 1 sequentially sends first state inquiry messages SE at intervals of T391 seconds (10 seconds) to confirm recovery of the frame relay network F₁.

After the frame relay network F₁ received the first state inquiry message SE sent from the frame relay communication device 1 in step SB4, the frame relay network F₁ is recovered. Then, if the first state inquiry message SE is sent from the frame relay communication device 1, the first state inquiry message SE is normally received by the frame relay network F₁.

With this, in step SB6, the frame relay network F₁ sends a first response message S for the first state inquiry message SE to the frame relay communication device 1. Then, the first response message S is received by the frame relay communication device 1.

At this point of time, frame relay communication device 1 does not recognizes recovery of the frame relay network F₁. That is, the frame relay communication device 1 does not recognize the recovery until the first response messages S are received continuously N392 times (three times) after the frame relay communication device 1 recognized the fault.

In steps SB7 to SB10, the first state inquiry message SE and the first response message S are sent and received between the frame relay communication device 1 and the frame relay network F₁. In step SB10, if the frame relay communication device 1 received the first response message S, since the number of receptions of the first response message S becomes N392 times (three times), the frame relay communication device 1 recognizes recovery of the frame relay network F₁.

In step SB, the frame relay communication device 1 sends second state inquiry message SE-F (full-state display) to the frame relay network F₁. If the second state inquiry message SE-F is received by the frame relay network F₁, the frame relay network F₁ recognizes the states of the first data link PVC#1 and the second data link PVC#2 (see Fig. 6) in the same manner as that described above . In this case, the first data link PVC#1 is in an inactive state, and the second data link PVC#2 is in an active state. Therefore, in step SB12, the frame relay network F₁ sends, to the frame relay communication device 1, a second response message S-F (full-state display) for informing that the first data link PVC#1 is in the inactive state, and the second data link PVC#2 is in the active state.

If the frame relay communication device 1 received the second response message S-F (full-state display), the frame relay communication device 1 recognizes that the first data link PVC#1 is in the inactive state, and the second data link PVC#2 is in the active state. Since the first data link PVC#1 can not be used, the frame relay communication device 1 stop sending frames to the frame relay communication device 2 as in the same manner as that described above.

Immediately after the frame relay communication device 1 recognized the states of the first data link PVC#1 and the second data link PVC#2, the first data link PVC#1 is changed from the inactive state to the active state like the case shown in Fig. 7.

Thereafter, as in the steps SA3 to SA12 (see Fig. 7), the first state inquiry message SE and the first response message S are sent and received between the. frame relay communication device 1 and the frame relay network F₁.

After the first state inquiry messages SE (link completeness confirmations) were sent five times, if the first response message S (link completeness confirmation) is received in step SB16, the frame relay communication device 1 sends the second state inquiry message SE-F (full-state display) to the frame relay network F₁ in step SB17.

If the second state inquiry message SE-F (full-state display) is received by the frame relay network F₁, the frame relay network F₁ confirms states of the first data link PVC#1 and the second data link PVC#2 (see Fig. 6) as in the same manner as that described above . In this case, both the first data link PVC#1 and the second data link PVC#2 are in the active states. Therefore, in step SB18, the frame relay network F₁ sends, to the frame relay communication device 1, the second response message S-F (full-state display) for informing that both the first data link PVC#1 and the second data link PVC#2 are in the active states.

If the frame relay communication device 1 received the second response message S-F (full-state display), the frame relay communication device 1 recognizes that the first data link PVC#1 and the second data link PVC#2 are in the active states. That is, even if the fault was generated in the frame relay network F₁ and the frame relay network F₁ was recovered, the frame relay communication device 1 recognizes this change after maximum T391×N391 seconds (60 seconds) from an instant when the first data link PVC#1 was actually changed from the inactive state to the active state.

In the conventional frame relay communication system shown in Fig. 7 and Fig. 8, there is a problem in that since the second state inquiry messages SE-F are sent at intervals of T391×N391 seconds (60 seconds), even if the state of the first data link PVC#1 (or the second data link PVC#2) is changed during this time, time as long as 60 seconds is elapsed until the frame relay communication device 1 recognizes this changed. Thus, in this case, even if the frame can be sent, sending of the frames is stopped during this time due to the 60 second time lag, there is a problem that the transferring rate is lowered.

The present invention has been accomplished in view of the above circumstances, and it is an object of the invention to provide a frame relay communication device, a frame relay switchboard, a frame relay communication system and a Method of controlling a unit for confirming PVC state in which the frame relay communication device can swiftly recognize a change in state of a data link between a frame relay communication device and a frame relay communication device.

### DISCLOSURE OF THE INVENTION

The frame relay communication device according to one aspect of the present invention comprises a sending unit which sends at least twice continuously, to a frame relay network, a state inquiry message for inquiring normality of a data link between a frame relay communication device of a party on the other end of communication connected through the frame relay network; and a receiving unit (corresponding to a CPU 11 in a later-described first embodiment) which receives a response message corresponding to the state inquiry message sent from the frame relay network to recognize a state of the data link based on a reception-result.

According to the above-mentioned aspect of this invention, if the sending unit sends a state inquiry message of a first time, the state inquiry message is received by the frame relay network. With this, the frame relay network sends a response message corresponding to the state of the data link between the frame relay communication device and another frame relay communication device. It is assumed that the state of the data link has changed immediately after the response message was sent. If the receiving unit received the response message, the receiving unit recognizes the state of the data link from the response message. In this case, the receiving unit can not recognize the change in state of the data link.

However, if a state inquiry message of a second time was sent from the sending unit, the state inquiry message is received by the frame relay network. With this, the frame relay network sends a response message corresponding to the state of the data link between the frame relay communication device and the frame relay communication device. The response message sent at that time corresponds to the change in state of the data link. Therefore, if the receiving unit received the response message, the receiving unit recognizes the change in state of the data link.

Thus, since the state inquiry message is sent at least twice continuously, even if the state of the data link has changed, the change of the state can be recognized based on the state inquiry message of the second time within an extremely short time as short as a time corresponding to one transmission of the state inquiry message at least.

Further, in the frame relay communication device, the sending unit sends the state inquiry message to the frame relay network a plurality of times until the receiving unit receives the response message.

Thus, the sending unit sends the state inquiry message to the frame relay network at the predetermined time intervals until the receiving unit receives the response message. Therefore, according to the invention of claim 2, it is possible to recognize the change in state of the data link within a shorter time than the prior art within a time corresponding to one transmission of the state inquiry message at least.

The above frame relay communication device further comprises a fault detecting unit (corresponding to a CPU 11 in a later-described first embodiment) which detects failure of the frame relay network, and after the fault was detected by the fault detecting unit, if the frame relay network was recovered, the sending unit sends the state inquiry message at least twice continuously immediately after the recovery.

Thus, after a fault was detected by the fault detecting unit, if the frame relay network was recovered, the sending unit send the state response message to the frame relay network at least twice continuously. According to the invention of claim 3, since the state inquiry message is sent at least twice continuously, even if the frame relay network is out of order, it is possible to recognize the change in state based on the state inquiry message of the second time within an extremely short time as short as time corresponding to one transmission of the state inquiry message at least.

The frame relay switchboard according to another aspect of the present invention accommodates a frame relay communication device (corresponding to a frame relay communication device 40 in a later-described second embodiment) which sends, to the frame relay network at predetermined time intervals, a first state inquiry message for inquiring normality of a first data link between a frame relay network, or a second state inquiry message for inquiring normality of a second data link between a frame relay communication device of a party on the other end of communication connected through the frame relay network, based on a PVC state confirming procedure. This frame relay switchboard (corresponding to a frame relay switchboard 50 in the later-described second embodiment) comprises a receiving unit (corresponding to a CPU 51 in the later-described second embodiment) which receives the first state inquiry message and the second state inquiry message; a sending unit (corresponding to the CPU of the later-described second embodiment) which sends, to the frame relay communication device, the first state inquiry message received by the receiving unit, a first response message or a second response message corresponding to the second state inquiry message; and a monitor unit which monitors a state of the second data link. When a state of the second data link has changed, the sending unit sends the second response message to the frame relay communication device based on a monitoring-result of the monitor unit irrespective of a reception-result in the receiving unit.

According to the above-mentioned aspect of this invention, the communication unit normally sends, to the frame relay communication device, a first response message or a second response message corresponding to a first state inquiry message or a second state inquiry message based on the monitoring-result of the monitor unit when the state of the second data link is not changed.

However, if the state of the second data link has changed, the sending unit sends a second response message corresponding to the change in state to the frame relay communication device irrespective of the reception-result of the receiving unit.

Thus, when the state of the second data link has changed, the second response message is sent to the frame relay communication device and thus, it is possible to recognize the change in state within an extremely short time as compared with the prior art.

The frame relay communication system according to still another aspect of the present invention comprises a frame relay communication device (corresponding to a frame relay communication device 10 of a later-described first embodiment) including a sending unit which sends, to a frame relay network at least twice continuously, a state inquiry message for inquiring normality of a data link between a frame relay communication device of a party on the other end of communication connected through a frame relay network; a receiving unit which receives a response message corresponding to the state inquiry message sent from the frame relay network to recognize a state of the data link based on a reception-result; and a frame relay switchboard (corresponding to a frame relay switchboard 4 of the later-described first embodiment) including a receiving unit disposed in the frame relay network for receiving the state inquiry message, and a sending unit which sends, to the frame relay communication device, the response message corresponding to the state of the data link.

According to the above-mentioned aspect of this invention, if a state inquiry message of a first time is sent from the sending unit of the frame relay communication device, this state inquiry message is received by the receiving unit of the frame relay switchboard. With this, the sending unit of the frame relay switchboard sends a response message corresponding to the state of the data link between the frame relay communication device and the frame relay communication device. It is assumed that the state of the data link has changed immediately after the response message was sent. If the response message was received by the receiving unit, the receiving unit of the frame relay communication device recognizes the state of the data link from the response message. In this case, the receiving unit can not recognize the change in state of the data link.

However, if a state inquiry message of a second time was sent from the sending unit of the frame relay communication device, this state inquiry message is received by the receiving unit of the frame relay switchboard. With this, the sending unit of the frame relay switchboard sends a response message corresponding to the state of the data link between the frame relay communication device and the frame relay communication device. The response message sent at this time corresponds to the change in state of the data link. Therefore, if the response message was received by the receiving unit of the frame relay communication device, the receiving unit recognizes the change in the state of the data link.

Thus, since the state inquiry message is sent from the sending unit of the frame relay communication device at least twice continuously, even if the state of the data link is changed, it is possible to recognize the change in state based on the state inquiry message of the second time within an extremely short time as short as a time corresponding to one transmission of the state inquiry message at least.

The method of controlling a procedure for confirming PVC state according to still another aspect of the present invention comprises sending (corresponding to steps SC1 and SC3 in the later-described first embodiment), to a frame relay network at least twice continuously, a state inquiry message for inquiring normality of a data link between a frame relay communication device of a party on the other end of communication connected through a frame relay network; and receiving (corresponding to steps SC2 and SC4 of the later-described first embodiment) a response message corresponding to the state inquiry message sent from the frame relay network to recognize a state of the data link.

According to the above-mentioned aspect of this invention, the state inquiry message sent for the first time is received by the frame relay network. With this, the frame relay network sends a response message corresponding to the state of the data link between the frame relay communication device and the frame relay communication device. It is assumed that the state of the data link has changed immediately after the response message was sent. Then, if the response message is received, the state of the data link is recognized from the response message in this step. In this case, the change in state of the data link can not be recognized.

However, if the state inquiry message of the second time is sent, this state inquiry message is received by the frame relay network. With this, the frame relay network sends a response message corresponding to the state of the data link between the frame relay communication device and the frame relay communication device. The response message sent at this time corresponds to the change in state of the data link. Therefore, if the response message is received, the change in state of the data link is recognized from the response message.

Thus, since the state inquiry message is sent at least twice continuously, even if the state of the data link is changed, it is possible to recognize the change in state based on the state inquiry message of the second time with in an extremely short time as short as a time corresponding to one transmission of the state inquiry message at least.

The method of controlling a procedure for confirming PVC state according to still another aspect of the present invention comprises a first sending step (corresponding to steps SC1 and SC3 in the later-described first embodiment) of sending, to a frame relay network at least twice continuously, a state inquiry message for inquiring normality of a data link between a frame relay communication device and another frame relay communication device connected to each other through a frame relay network; a first receiving step (corresponding to steps SC1 and SC3 in the later-described first embodiment) of receiving the state inquiry message; a second sending step (corresponding to steps SC2 and SC4 in the later-described first embodiment) of sending the response message in accordance with a state of the data link based on a reception-result in the first receiving step; and a second receiving step (corresponding to steps SC2 and SC4 in the later-described first embodiment) of receiving a response message corresponding to the state inquiry message to recognize a state of the data link based on the reception-result.

According to the above-mentioned aspect of this invention, in the first sending step, if a state inquiry message of a first time was sent, this state inquiry message is received in the first receiving step. With this, in the second sending step, a response message corresponding to the state of the data link between the frame relay communication device and the frame relay communication device is sent. Here, it is assumed that the state of the data link has changed immediately after the response message was sent. In the second receiving step, the response message is received, and the state of the data link is recognized from the response message. In this case, the change in state of the data link is not recognized in the second receiving step.

However, if a state inquiry message of a second time was sent in the first sending step, the state inquiry message is received in the first receiving step. In the second sending step, a response message corresponding to a state of the data link between the frame relay communication device and the frame relay communication device is sent. The response message sent at this time corresponds to the change in the state of the data link. Therefore, the change of the state of the data link is recognized from the response message in the second receiving step.

Thus, since the state inquiry message is sent at least twice continuously in the first sending step, even if the state of the data link is changed, it is possible to recognize the change of the state based on the state inquiry message of the second time within an extremely short time as short as a time corresponding to one transmission of the state inquiry message at least.

### BRIEF DESCRIPTION OF THE DRAWINGS

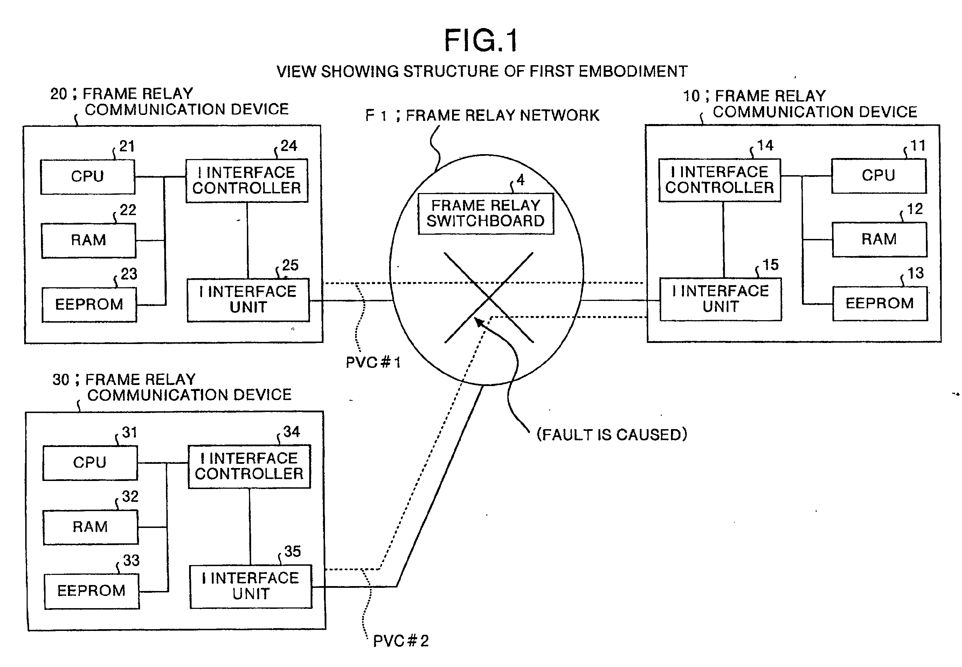

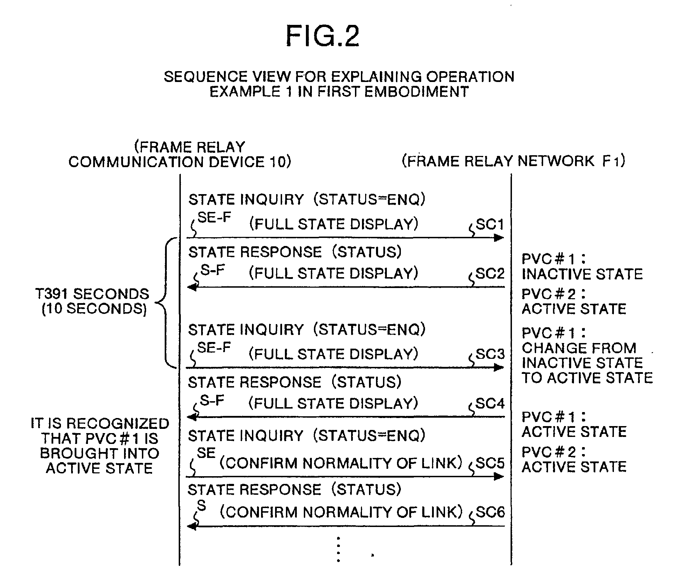

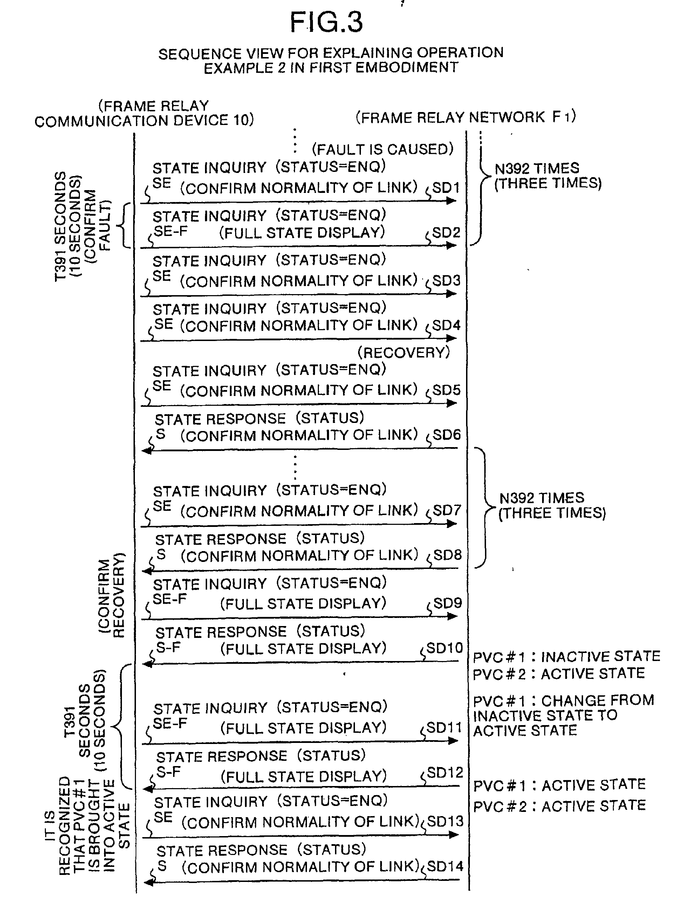

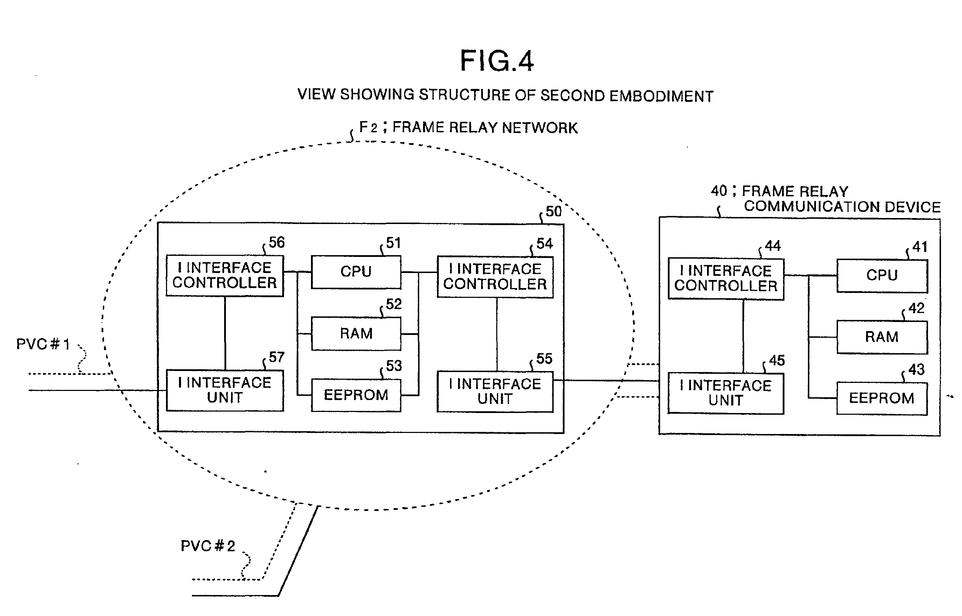

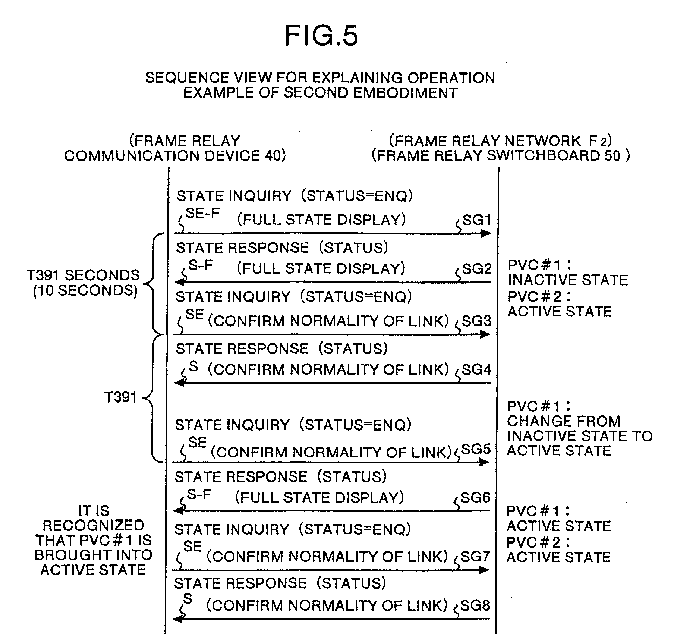

Fig. 1 shows a structure of a first embodiment of the present invention; Fig. 2 is view for explaining in sequence an operation example 1 of the first embodiment; Fig. 3 is view for explaining in sequence an operation example 2 of the first embodiment; Fig. 4 shows a structure of a second embodiment of the invention; Fig. 5 is view for explaining in sequence an operation of the second embodiment; Fig. 6 shows a structure of a conventional frame relay communication system; Fig. 7 is view for explaining in sequence an operation example 1 of the conventional frame relay communication system; and Fig. 8 is view for explaining in sequence an operation example of the conventional frame relay communication system.

### BEST MODE FOR CARRYING OUT THE INVENTION

First and second embodiments of a frame relay communication device, a frame relay switchboard, a frame relay communication system and a Method of controlling a unit for confirming PVC state will be explained below.

Fig. 1 shows a structure of a first embodiment of the present invention. In Fig. 1, members corresponding to those shown in Fig. 6 are designated with the same symbols, and explanation thereof is omitted. In Fig. 1, frame relay communication devices 10, 20 and 30 are provided instead of the frame relay communication devices 1 to 3. Basic functions of the frame relay communication devices 10, 20 and 30 are the same as those of the frame relay communication devices 1 to 3, but the above-described PVC state confirming procedure is different. Details of the PVC state confirming procedure will be described later.

The frame relay communication device 10 shown in Fig. 1 comprises a CPU (Central Processing Unit) 11, a RAM (Random Access Memory) 12, an EEPROM (Electric ally Erasable Read Only Memory) 13, an I interface controller 14 and an I interface unit 15.

The CPU 11 controls various portions in an apparatus. More specifically, the CPU 11 controls communication in the frame relay communication, executes the PVC state confirming procedure and the like. The RAM 12 is a memory for temporarily storing various data. The EEPROM 13 stores frame ware executed by the CPU 11, various Boolean variables and the like. The I interface controller 14 controls the I interface unit 15, and controls sending operation of a frame and the like to the frame relay network F₁, and receiving operation of a frame and the like from the frame relay network F₁. The I interface unit 15 is directly connected to the frame relay network F₁ through a line, and is an interface between the frame relay network F₁ and the frame relay communication device 10.

The frame relay communication device 20 and the frame relay communication device 30 are constituted in the same manner as the frame relay communication device 10. That is, the frame relay communication device 20 comprises a CPU 21, a RAM 22, an EEPROM 23, an I interface controller 24 and an I interface unit 25. Similarly, the frame relay communication device 30 comprises a CPU 31, a RAM 32, an EEPROM 33, an I interface controller 34 and an I interface unit 35.

Next, the operation example 1 of the first embodiment will be explained with reference to Fig. 2. The operation example 1 relates to the PVC state confirming procedure after the frame relay communication device 10 (see Fig. 1) is brought into a communication-possible state. Therefore, the operation example 1 shown in Fig. 2 corresponds to the conventional operation example 1 shown in Fig. 7. In the following description, the PVC state confirming procedure is actually executed by the CPUs 11, 21 and 31, but for convenience of explanation, the explanation will be made based on assumption that the PVC state confirming procedure is executed by the frame relay communication devices 10, 20 and 30.

In Fig. 2, if the frame relay communication device 10 is brought into the communication-possible state, in step SC1, the frame relay communication device 10 sends s second state inquiry message SE-F (full-state display) to the frame relay network F₁. Then, if the frame relay network F₁ received the second state inquiry message SE-F, the frame relay network F₁ confirms states of the first data link PVC#1 and the second data link PVC#2 (see Fig. 1).

In this case, it is assumed that the first data link PVC#1 is in an inactive state and the second data link PVC#2 is in an active state. Therefore, in step SC2,the frame relay network F₁ sends, to the frame relay communication device 10, a second response message S-F (full-state display) is in the active state.

If the frame relay communication device 10 received the second response message S-F (full-state display), the frame relay communication device 10 recognizes that the first data link PVC#1 is in the inactive state and the second data link PVC#2 is in the active state. With this, since the first data link PVC#1 can not be used, the frame relay communication device 10 stops sending frames to the frame relay communication device 20.

The frame relay communication device 10 recognizes that the first data link PVC#1 was changed from the inactive state to the active state immediately after the frame relay communication device 10 recognized the states of the first data link PVC#1 and the second data link PVC#2.

After T391 seconds (10 seconds) from an instant when the second state inquiry message SE-F (full-state display) was sent (step SC1), the frame relay communication device 10 continuously sends second state inquiry message SE-F (full-state display) of second time to the frame relay network F₁ in step SC3.

If the frame relay network F₁ received the second state inquiry message SE-F (full-state display), the frame relay network F₁ confirms the states of the first data link PVC#1 and the second data link PVC#2 (see Fig. 1) in the same manner as that described above. In this case, both the first data link PVC#1 and the second data link PVC#2 are inactive states. Therefore, in step SC4, the frame relay network F₁ sends, to the frame relay communication device 10, a second response message S-F (full-state display) for informing that both the first data link PVC#1 and the second data link PVC#2 are in the active states.

If the frame relay communication device 10 received the second response message S-F (full-state display), the frame relay communication device 10 recognizes that both the first data link PVC#1 and the second data link PVC#2 are in the active states.

That is, in this case, since the second state inquiry messages SE-F (full-state display) are sent twice continuously (step SC1 and step SC3), the frame relay communication device 10 recognizes this change after a short time as short as T391 seconds (10 seconds) from an instant when the first data link PVC#1 was actually changed from the inactive state to the active state.

Thereafter, in step SC5 and subsequent steps, the first state inquiry message SE and the first response message S are sent and received repeatedly between the frame relay communication device 10 and the frame relay network F₁, thereby executing the PVC state confirming procedure.

Next, the operation example 2 will be explained with reference to Fig. 3. This operation example 2 relates to the PVC state confirming procedure after the frame relay communication device 10 is brought into a communication-possible state (line up state). The operation example 2 is an example of a PVC state confirming procedure when a fault is generated in the frame relay network F₁ shown in Fig. 1. Therefore, the operation example 2 shown in Fig. 3 corresponds to the conventional operation example 2 shown in Fig. 8. The PVC state confirming procedure is executed by the CPUs 11, 21 and 31 shown in Fig. 1, but in the following description, for convenience of explanation, the explanation will be made based on assumption that the PVC state confirming procedure is executed by the frame relay communication devices 10, 20 and 30.

In steps SD1 to SD10 as show in Fig. 3, the same operations as those in the steps SB1 to SB12 are carried out. That is, if a fault is generated in the frame relay network F₁ in a state in which the first state inquiry messages SE (second state inquiry messages SE-F) are sequentially sent from the frame relay communication device 10 to the frame relay network F₁, the frame relay network F₁ does not send the first response message S (second response message S-F).

After a first state inquiry message SE of second time among the N393 times (four times) was sent in step SD1, the frame relay communication device 10 recognizes the first response message S was not received from the frame relay network F₁. After T391 seconds (10 seconds) from an instant when the first state inquiry message SE was sent, the frame relay communication device 10 recognizes that a second response message S-F was not received from the frame relay network F₁ after a second state inquiry message SE-F of third time was sent to the frame relay network F₁ (step SD2).

With this, sending of frame is stopped after the frame relay communication device 10 recognizes that a fault is generated in the frame relay network F₁. In step SD3 and subsequent steps, the frame relay communication device 10 sequentially sends the first state inquiry messages SE at intervals of T391 seconds (10 seconds) to confirm recovery of the frame relay network F₁.

After the frame relay network F₁ received a first state inquiry message SE sent from the frame relay communication device 10 in step SD4, the frame relay communication device 10 recognizes that the frame relay network F₁ was recovered. In step SD5, if the first state inquiry message SE is sent from the frame relay communication device 10, the first state inquiry message SE is normally received by the frame relay network F₁.

With this, in step SD6, the frame relay network F₁ sends a first response message S for the first state inquiry message SE to the frame relay communication device 10. At this point of time, the frame relay communication device 10 does not recognize the recovery of the frame relay network F₁.

From this point of time to step SD8, the first state inquiry message SE and the first response message S are sent and received between the frame relay communication device 10 and the frame relay network F₁. In step SD8, if the frame relay communication device 10 received a first response message S, since the number of receptions of the first response messages S is N392 times (three times), the frame relay communication device 10 recognizes the recovery of the frame relay network F₁.

In step SD9, the frame relay communication device 10 sends a second state inquiry message SE-F (full-state display) to the frame relay network F₁. If the second state inquiry message SE-F was received by the frame relay network F₁, the frame relay network F₁ confirms the states of the first data link PVC#1 and the second data link PVC#2 (see Fig. 1). In this case, it is assumed that the first data link PVC#1 is in the inactive state and the second data link PVC#2 is in the active state.

Therefore, in step SD10, the frame relay network F₁ sends, to the frame relay communication device 10, a second response message S-F (full-state display) for informing that the first data link PVC#1 is in the inactive state and the second data link PVC#2 is in the active state.

If the frame relay communication device 10 received the second response message S-F (full-state display), the frame relay communication device 10 recognizes that the first data link PVC#1 is in the inactive state and the second data link PVC#2 is in the active state. With this, since the first data link PVC#1 can not be used, the frame relay communication device 10 stops sending a frame to the frame relay communication device 20.

The first data link PVC#1 is changed from the inactive state to the active state immediately after the frame relay communication device 10 recognized the states of the first data link PVC#1 and the second data link PVC#2.

After T391 seconds (10 seconds) from an instant when the second state inquiry message SE-F (full-state display) was sent (step SD9), the frame relay communication device 10 continuously sends second state inquiry message SE-F (full-state display) of second time to the frame relay network F₁ in step SD11.

If the frame relay network F₁ received the second state inquiry message SE-F (full-state display), the frame relay network F₁ confirms the states of the first data link PVC#1 and the second data link PVC#2 (see Fig. 1) in the same manner as that described above. In this case, both the first data link PVC#1 and the second data link PVC#2 are in the active states. Therefore, in step SD12, the frame relay network F₁ sends, to the frame relay communication device 10, a second response message S-F (full-state display) for informing that the first data link PVC#1 and the second data link PVC#2 are in the active states.

If the frame relay communication device 10 received the second response message S-F (full-state display), the frame relay communication device 10 recognizes that the first data link PVC#1 and the second data link PVC#2 are in the active states.

That is, in this case, since the second state inquiry messages SE-F (full-state display) are sent twice continuously (steps SD9 and SD11), the frame relay communication device 10 recognized this change after a time as short as T391 seconds (10 seconds) from an instant when the first data link PVC#1 was actually changed from the inactive state to the active state.

Thereafter, in step SD13 and subsequent steps, the first state inquiry message SE and the first response message S are repeatedly sent and received between the frame relay communication device 10 and the frame relay network F₁, and the PVC state confirming procedure is executed.

In the first embodiment, the second state inquiry messages SE-F (full-state display) are sent twice continuously, but the present invention is not limited to this, and the second state inquiry messages SE-F may be sent three times or more continuously until the second response message S-F (full-state display) is received.

In the first embodiment, as explained with reference to Fig. 2 and Fig. 3, the frame relay communication device 10 can recognize the change in state of the first data link PVC#1 (second data link PVC#2) after a time as short as T391 seconds (10 seconds) by continuously sending the second state inquiry messages SE-F twice, but the invention is not limited to this. For example, the same effect may be obtained by changing the PVC state confirming procedure of the frame relay network (frame relay switchboard). This case will be explained as the second embodiment below.

Fig. 4 shows a structure of the second embodiment of the present invention. Components corresponding to those shown in Fig. 1 are designated with the same symbols. Basic function of a frame relay communication device 40 is the same as that of the frame relay communication device 10 (see Fig. 1). A function of the PVC state confirming procedure of the frame relay communication device 40 is partially different from that of the frame relay communication device 10.

That is, in the frame relay communication device 40, as shown in steps SG5 and SG6, the frame relay communication device 40 includes a function for receiving a second response message S-F (full-state display) as a normal message if this messages was received after the first state inquiry message SE (link completeness confirmation) was sent. Details of this function will be described latter.

A frame relay network F₂ shown in Fig. 4 accommodates the frame relay communication device 40 and another frame relay communication device (not shown) . In the frame relay network F₂, the frame relay communication device 40 comprises a CPU 41 for controlling communication and the PVC state confirming procedure, a RAM 42, an EEPROM 43, an interface unit 45 connected, through a line, later-described I interface unit 55 and an I interface controller 44 for controlling the interface unit 45.

A frame relay switchboard 50 includes a function for exchanging a frame sent from the frame relay communication device 40 (or the frame relay communication device which is not shown) to a device of party on the other end of communication, and a function for executing the PVC state confirming procedure.

Basic function of the frame relay switchboard 50 is the same as that of the frame relay switchboard 4 (see Fig. 1). However, a function concerning the PVC state confirming procedure in frame relay switchboard 50 is partially different from that of the frame relay switchboard 4.

That is, the frame relay switchboard 50 includes a function for sending (step SG6) a second response message S-F (full-state display) if a first state inquiry message SE (link completeness confirmation) was received after a state of the first data link PVC#1 (or second data link PVC#2) was changed as shown in Fig. 5. Details of this function will be described later.

The frame relay switchboard 50 includes a CPU 51 for controlling the exchange of frames and controlling the PVC state confirming procedure, a RAM 52 for temporarily storing data, and an EEPROM 53 for storing frame ware executed by the CPU 51.

The I interface unit 55 is connected, through a line, to the interface unit 45 of the frame relay communication device 40 which is a party on the other end of communication in the first data link PVC#1, and functions as an interface. The I interface controller 54 controls the I interface unit 55. Similarly, an I interface unit 57 is connected, through a line, to a frame relay communication device (not shown) which is the other party on the other end of communication in the first data link PVC#1.

An I interface controller 56 controls the I interface unit 57. In the frame relay switchboard 50, an I interface controller and an I interface unit corresponding to the second data link PVC#2 are omitted in the drawing. The second data link PVC#2 is set between the frame relay communication device 40 and the frame relay communication device (not shown).

Next, the operation in the second embodiment will be explained with reference to a sequence view shown in Fig. 5. The operation explained below relates to a PVC state confirming procedure after the frame relay communication device 40 (see Fig. 4) is brought into a communication-possible state (line up state).

In the following description, the PVC state confirming procedure is actually executed by the CPUs 41 and 51, but for convenience of explanation, the explanation will be made based on assumption that the PVC state confirming procedure is executed by the frame relay communication devices 40 and 50 (frame relay network F₂).

In Fig. 5, if the frame relay communication device 40 is brought into the communication-possible state, in step SG1, the frame relay communication device 40 sends a second state inquiry message SE-F (full-state display) to the frame relay switchboard 50. If the frame relay switchboard 50 received the second state inquiry message SE-F, the frame relay switchboard 50 confirms states of the first data link PVC#1 and the second data link PVC#2 (see Fig. 4).

In this case, it is assumed that the first data link PVC#1 is in an active state and the second data link PVC#2 is in an active state. Therefore, in step SG2, the frame relay switchboard 50 sends, to the frame relay communication device 40, a second response message S-F (full-state display) for informing that the first data link PVC#1 is in the inactive state and the second data link PVC#2 is in the active state.

If the frame relay communication device 40 received the second response message S-F (full-state display), the frame relay communication device 40 recognizes that the first data link PVC#1 is in the inactive state and the second data link PVC#2 is in the active state. Since the first data link PVC#1 can not be used, the frame relay communication device 40 stops sending frames to the frame relay communication device (not shown).

After T391 seconds (10 seconds) from an instant when the second state inquiry message SE-F (full-state display) (step SG1) was sent, the frame relay communication device 40 sends a first state inquiry message SE (link completeness confirmation) to the frame relay switchboard 50 in step SG3. If the first state inquiry message SE (link completeness confirmation) was received, in step SG4, the frame relay switchboard 50 sends the first response message S (link completeness confirmation) to the frame relay communication device 40.

It is assumed that the first data link PVC#1 was changed from the inactive state to the active state immediately after the frame relay switchboard 50 sent the first response message S. The frame relay switchboard 50 recognizes this change.

In step SG5, the frame relay communication device 40 sends a first state inquiry message SE (link completeness confirmation) to the frame relay switchboard 50. If the first state inquiry message SE (link completeness confirmation) was received, in step SG6, since the first data link PVC#1 changed from the inactive state to the active state, the frame relay switchboard 50 sends a second response message S-F (full-state display) to the frame relay communication device 40 for informing of this change, instead of the first response message S.

If the frame relay communication device 40 received the second response message S-F (full-state display), the frame relay communication device 40 recognizes that both the first data link PVC#1 and the second data link PVC#2 are in the active states.

That is, in this case, even if the frame relay switchboard 50 received the first state inquiry message SE (link completeness confirmation) after the state of the first data link PVC#1 was changed, the second response message S-F (full-state display) is sent to the frame relay communication device 40. Therefore, the frame relay communication device 40 recognizes this change after a short time as short as T391 seconds (10 seconds) from an instant when the first data link PVC#1 was changed from the inactive state to the active state.

In step SG7 and subsequent steps, the first state inquiry message SE and the first response message S are repeatedly sent and received between the frame relay communication device 40 and the frame relay switchboard 50, and the PVC state confirming procedure is executed.

As described above, according to the present invention, since the state inquiry messages are continuously sent at least twice, even if the state of the data link has changed, there is effect that the change in state can be recognized based on the second state inquiry message within an extremely short time as short as an interval corresponding to one transmission of the state inquiry message at least.

Further, the present invention achieves an effect that a change in state of the data link can be recognized in a shorter time than the conventional method within a time corresponding to one transmission of the state inquiry message at least.

Further, the present invention achieves an effect that since the state inquiry message is sent twice continuously, even if the state of the data link has changed, and even if a fault was generated in the frame relay network, the change in state can be recognized based on the second state inquiry message within an extremely short time as short as a time corresponding to one transmission of the state inquiry message at least.

Further, since the second response message is sent to the frame relay communication device when the state of the second data link has changed, the present invention achieves an effect that change in state can be recognized within an extremely short time as compared with prior art.

Further, since the state inquiry message is sent from the sending unit of the frame relay communication device at least twice, even if the state of the data link has changed, the change in state can be recognized based on the second state inquiry message within an extremely short time corresponding to one transmission of the state inquiry message at least.

Further, since the state inquiry message is sent at least twice continuously, even if a state of the data link has changed, the change in state can be recognized based on the second state inquiry message within an extremely short time corresponding to one transmission of the state inquiry message at least.

Further, since the state inquiry message is at least twice continuously in the first sending step, even if the state of the data link has changed, the change in state can be recognized based on the second state inquiry message within an extremely short time corresponding to one transmission of the state inquiry message at least.

### INDUSTRIAL APPLICABILITY

As explained above, the frame relay communication device, frame relay switchboard, the frame relay communication system and the method of controlling a procedure for confirming PVC state re effective for frame relay communication service geared toward speed up.

## Claims

1. A frame relay communication device comprising
a sending unit which sends at least twice continuously, to a frame relay network, a state inquiry message for inquiring normality of a data link between a frame relay communication device of a party on the other end of communication connected through the frame relay network; and
a receiving unit which receives a response message corresponding to the state inquiry message sent from said frame relay network to recognize a state of the data link based on the received response message.

2. The frame relay communication device according to claim 1, wherein said sending unit sends the state inquiry message to the frame relay network a plurality of times until said receiving unit receives the response message.

3. The frame relay communication device according to claim 1 or 2, further comprising a fault detecting unit which detects failure and recovery of said frame relay network,
wherein after said frame relay network has recovered from the failure, said sending unit sends the state inquiry message at least twice continuously immediately after the recovery.

4. A frame relay switchboard for accommodating a frame relay communication device which sends, to said frame relay network at predetermined time intervals, a first state inquiry message for inquiring normality of a first data link between a frame relay network, or a second state inquiry message for inquiring normality of a second data link between a frame relay communication device of a party on the other end of communication connected through said frame relay network, based on a PVC state confirming procedure, said frame relay switchboard comprising:
a receiving unit which receives the first state inquiry message and the second state inquiry message;
a sending unit which sends, to said frame relay communication device, the first state inquiry message received by said receiving unit, a first response message or a second response message corresponding to the second state inquiry message; and
a monitor unit which monitors a state of the second data link,
wherein if a state of the second data link has changed, said sending unit sends the second response message to said frame relay communication device based on a monitoring-result of said monitor unit irrespective of a reception-result in said receiving unit.

5. A frame relay communication system comprising:
a frame relay communication device including,
a sending unit which sends, to a frame relay network at least twice continuously, a state inquiry message for inquiring normality of a data link between a frame relay communication device of a party on the other end of communication connected through a frame relay network; and
a receiving unit which receives a response message corresponding to the state inquiry message sent from said frame relay network to recognize a state of the data link based on a reception-result; and
a frame relay switchboard including,
a receiving unit disposed in said frame relay network for receiving the state inquiry message; and
a sending unit which sends, to said frame relay communication device, the response message corresponding to the state of the data link.

6. A method of controlling a procedure for confirming PVC state comprising:
sending a state inquiry message, to a frame relay network at least twice continuously, for inquiring normality of a data link between a frame relay communication device of a party on the other end of communication connected through a frame relay network; and
receiving a response message corresponding to the state inquiry message sent from said frame relay network to recognize a state of the data link.

7. A method of controlling a procedure for confirming PVC state comprising:
sending a state inquiry message, to a frame relay network at least twice continuously, for inquiring normality of a data link between a frame relay communication device and another frame relay communication device connected to each other through a frame relay network;
receiving the state inquiry message;
sending a response message in accordance with a state of the data link based on received the state inquiry message; and
receiving the response message corresponding to the state inquiry message and recognizing the state of the data link based on the received response message.
